# FASCICULE DE BREVET EUROPEEN

(11) **EP 0 462 354 B1**
(45) Date de publication et mention de la délivrance du brevet: **17.04.1996**
(21) Numéro de dépôt: 90870078.4
(22) Date de dépôt: 21.05.1990
(51) Int. Cl.: A47J 37/12

(54) **Installation de cuisson de frites à partir de frites précuites surgelées**
Vorrichtung zum Kochen von tiefgekühlten, vorgekochten "Pommes Frites"
Cooking installation for deep-frozen pre-cooked french fries

(43) Date de publication de la demande: 27.12.1991
(73) Titulaire: Mareels, Marc, B-9400 Ninove (BE); EASTWOOD LTD, Tel-Aviv (IL)
(72) Inventeur: Mareels, Marc, 9400 Ninove (BE)
(74) Mandataire: Pieraerts, Jacques

(56) Documents cités:
- FR-A- 2 491 031
- FR-A- 2 593 308

## Description

La présente invention concerne une installation de cuisson de frites à partir de frites précuites surgelées. Le but de l'invention est de réaliser une installation de cuisson du type précité qui permet de délivrer des frites cuites de façon correcte, dans un minimum de temps, en faisant usage, au départ, de frites précuites maintenues à l'état surgelé, tout en évitant les problèmes dus à l' utilisation de produits surgéles en l'occurrence des frites, qui ont, d'autre part, tendance à s'agglomérer en raison du phénomène de givrage bien connu.

Une installation comprénant les caracteristiques contenues dans le préambule de la revendication 1 est connu du document FR-A-2 593 308; la dite installation comprende une enceinte de stockage sous frois et un plateau récepteur basculant controlé par une balance, a partir de laquelle les frites sont delivreés à la cuisson.

On sait, en effet, que le stockage à l'état surgelé de frites dans un silo, leur distribution en quantité mesurée et leur cuisson pour en faire un produit de qualité, posent divers problèmes qui n'ont pas tous été résolus de façon satisfaisante à ce jour. On sait parfaitement que les frites précuites et surgélées, couvertes de givre, ne fournissent pas un produit appréciable après leur cuisson à l'huile bouillante.

Pour remédier aux nombreux inconvénients des distributeurs connus à ce jour, l'installation comprende un silo à partir duquel les frites peuvent être délivrées à un premier panier faisant partie d'une balance de laquelle les frites sont delivreés à la cuisson, le silo et la balance étant disposés dans une enceinte où règne une température de surgélation, l'installation étant charactérisée en ce que un courant d'air froid est maintenu dans ladite enceinte et amené à circuler sur un évaporateur d'un dispositif refrigérateur disposé dans cette enceinte pour provoquer la dessication de l'air et donc le dégivrage des frites.

Dans une forme de réalisation particulièrement avantageuse, le premier panier précité est obturé à sa base par une goutière pivotante et le premier panier en question a la forme d'un entonnoir.

Toujours selon l'invention, l'enceinte précitée est disposée au dessus d'une enceinte de base séparée de la première part une cloison et une trappe isothermique synchronisée avec la gouttière pivotante précitée.

Dans une forme de réalisation avantageuse, la gouttière pivotante précitée est réunie à la trappe précitée par un moyen de liaison tel qu'un cable pour synchroniser le pivotement de cette gouttière avec l'ouverture de la trappe précitée.

Selon une autre particularité remarquable de l'invention un ventilateur est prévu pour provoquer un courant d'air à l'intérieur de l'enceinte de base précitée lorsque la porte frontale de celle-ci est ouverte, ledit courant d'air étant dirigé sur les frites dans le panier de cuisson au cours d'un arrêt du panier de cuisson lors de la phase de basculement de celui-ci.

D'autres particularités et avantages de l'invention resortiront de la description qui sera donnée ci-après d'une installation du cuisson de frites à partir de frites précuites surgelées, selon l'invention. Cette description n'est donnée qu'à titre d'exemple et ne limite pas l'invention. Les notations de référence se rapportent aux figures ci-jointes.

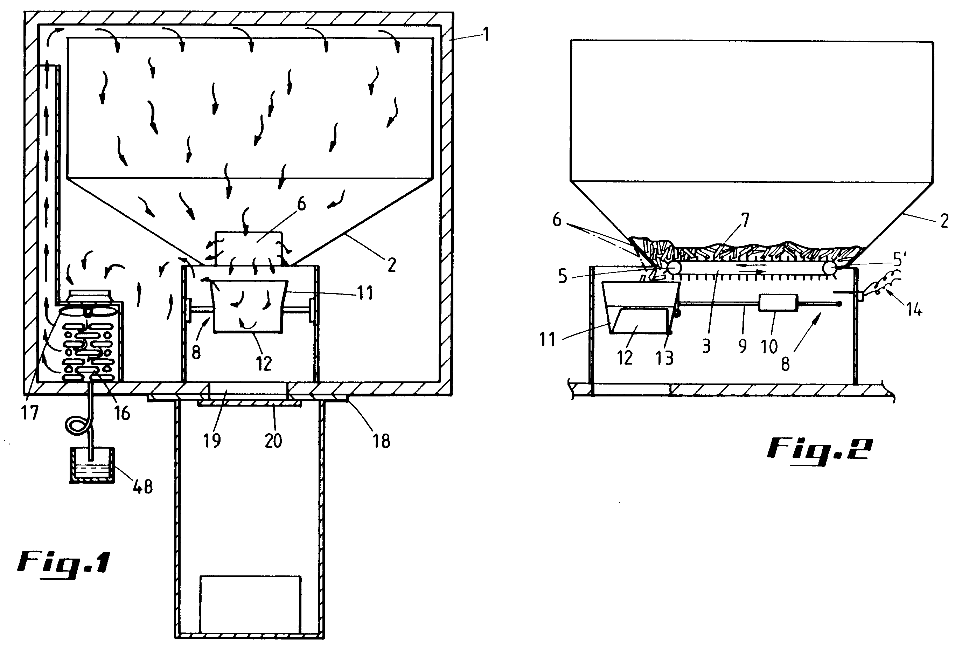

La figure 1 montre schématiquement le silo contenant les frites à l'état surgelé, la balance et l'évaporateur du dispositif refrigérateur, tous ces éléments étant montés dans une enceinte.

La figure 2 représente schématiquement le silo, la bande convoyeuse et le premier panier monté sur la balance.

La figure 3 décrit schématiquement la phase au cours de laquelle les frites sont évacuées de la balance pour être délivrées à un panier de cuisson.

La figure 4 illustre schématiquement la phase de cuisson.

La figure 5 illustre schématiquement la phase au cours de laquelle un courant d'air est amené à circuler sur les frites encore contenues dans le panier de cuisson pendant un arrêt du mouvement de basculement de celui-ci.

La figure 6 illustre la phase au cours de laquelle les frites sont déversées dans un récipient.

La figure 7 montre, à une échelle différente et en vue explosée la cuve à huile, la feuille d'aluminium perforée et le détecteur de niveau.

L'installation de cuisson représentée par ces diverses figures comporte un habillage extérieur qui n'est pas représenté, les diverses figures illustrant les diverses phases étant représentées séparément et de façon schematique.

Essentiellement, l'installation est caractérisée par une enceinte 1 à l'interieur de laquelle règne une température dite de surgélation. A l'intérieur de cette enceinte 1 est disposé le silo 2 obturé à sa base par une bande convoyeuse souple 3, muni de doigts souples 4 et guidé sur un cylindre d'entraînement 5 et un cylindre de renvoi 5'. A la base du silo 2 est prévu un clapet 6 pour le passage des frites 7.

Dans la même enceinte 1 est disposée une balance 8 représentée par un levier 9 equipé d'un contrepoids déplaçable 10. Le levier 9 porte un premier panier 11 ayant la forme générale d'un entonnoir dont le fond est obturé par une gouttière pivotante 12. Le point d'articulation de cette gouttière 12 est situé en 13. Un interrupteur du type "reed" 14 et influencé par les mouvements de la bascule est responsable du déplacement et de l'arrêt de la bande convoyeuse. Le temps de déplacement de la bande convoyeuse correspondra donc toujours à un poids préderterminé de frites dans le premier panier 11.

La conception de la gouttière pivotante 12 est particulièrement interessante puisqu'elle permet, de cette façon, de diriger les frites de façon correcte en direction du panier de cuisson 15 qui sera décrit ultérieurement.

Dans l'enceinte 1 est encore disposé l'évaporateur 16 appartenant au dispositif refrigérateur.

Un courant d'air représenté par de nombreuses flèches circule dans l'enceinte 1 et y est alimenté à partir d'un ventilateur 17. Le rôle de ce courant d'air froid est très important et sera décrit plus loin.

La base de l'enceinte 1 est constituée par une cloison 18 présentant un orifice 19 obturé par une trappe isothermique 20.

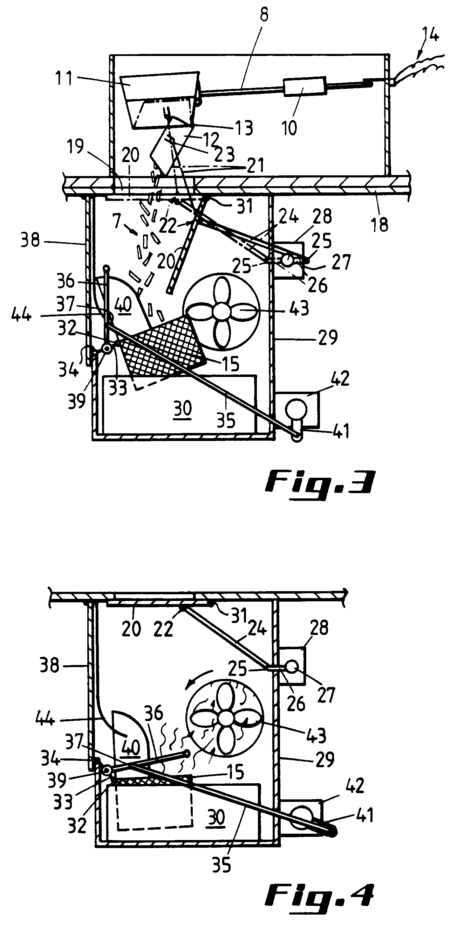

En se référant plus particulièrement aux figures 3 et 4 on peut remarquer le synchronisme entre la trappe 20 et le premier panier 11 qui obture à sa base le silo 2.

En effet, la trappe 20 qui est articulée en 31 sur la cloison 18 est reliée par un câble 21 relié à la gouttière pivotante 12. Le cable 21 est fixé en 22 sur la trappe 20 et en 23 sur la gouttière pivotante 12.

Comme il a déjà été dit, la gouttière pivotante 12 est articulée en 13 sur le premier panier 11. A cet endroit est également prévu un ressort de rappel qui ramène la gouttière pivotante 12 dans la position dans laquelle elle obture la base du premier panier 11.

La trappe isothermique 20 est manoeuvrée par un levier 24, qui s'articule d'une part en 22 sur cette trappe 20 et d'autre part en 25 sur un petit levier 26 fixé sur l'axe 27 d'un moteur 28 à commande programmée.

Les positions de fermeture et d'ouverture de la trappe 20 sont représentées respectivement en pointillés et en traits pleins à la figure 3.

La position dans laquelle la trappe 20 est maintenue ouverte et calculée de telle sorte que les frites parviennent très exactement dans le panier de cuisson 15.

Il a été préféré de disposer d'une trappe pivotant autours d'un axe horizontal pour provoquer ainsi, lors de l'ouverture de la trappe en question un déplacement d'air froid vers le bas plutôt que d'autoriser une montée d'air chaud en direction de l'enceinte 1 dans laquelle règne une température de surgélation.

La trappe 20 se déplace en effet à l'intérieur d'une enceinte de base où règne une température beaucoup plus élevée puisque cette enceinte de base, portant la référence 29 contient la cuve de cuisson 30 dans laquelle plonge le panieur de cuisson 15. Celui-ci est articulé par une extrémité en 32 sur un petit levier 33 dont l'autre extrémité est articulé en 34 sur l'enceinte de base 29.

Deux leviers, 35 et 36 articulés entre-eux en 37 provoquent les mouvements de basculement du panier de cuisson 15 et l'ouverture de la porte frontale 38. Le levier 36 est lui-même articulé à sa base en 39 sur le petit levier 33 cité plus haut. Le panier de cuisson 15 est muni d'une gouttière de déversement 40.

Le levier 35 est actionné, par l'intermédiaire d'une biellette 41, à partir du moteur programmé 42.

Dans l'enceinte de base 29 est prévu une ventilateur 43 dont le but est de faire circuler sur les frites dont la cuisson est achevée un courant d'air à température ambiante. Le but de cette opération est capital puisque grace à elle il est possible d'obtenir des frites croquantes. Ceci est un objectif essentiel de l'invention.

Quant à l'ouverture de la porte frontale 38 elle est provoquée par la pression exercée par le levier 36 sur un tige recourbée 44. Le moment où cette pression est exercée est representée à la figure 5.

La position représentée par cette figure 5 est également celle où le moteur programmé 42 est à l'arrêt. Le basculement du panier de cuisson est donc arrêté et à ce stade le ventilateur 43 chasse sur les frites cuites un courant d'air à température ambiante qui rend celles-ci croquantes. Cette phase du procédé de cuisson est donc primordiale et est considérée comme une caractéristique essentielle de l'invention.

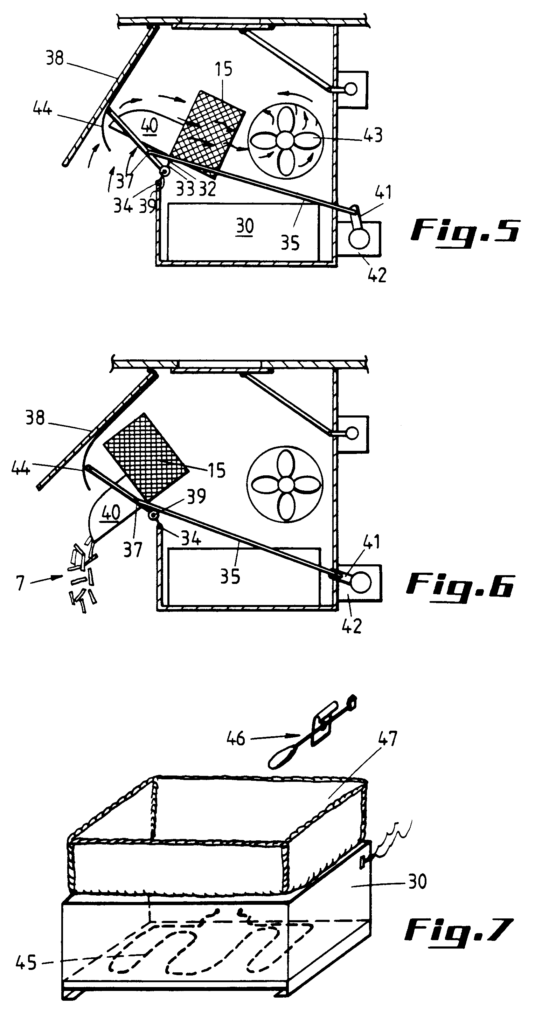

Au stade suivant, illustré par la figure 6, le basculement du panier de cuisson se poursuit et les frites 7 sont diversées dans un récipient non représenté aux figures. La distribution de ces récipients à partir d'une réserve peut se faire de différentes façons.

La tige recourbée 44 agit en son sommet sur la porte frontale 38 à la manière d'un ressort et assure de cette façon la fermeture étanche de cette porte frontale.

Concernant la cuve du cuisson 30 il est à remarquer que sa base est équipée de résistances de chauffage 45 et d'un détecteur de niveau 46 qui est représenté schematiquement à la figure 7.

Intérieurement, la cuve du cuisson 30 est tapissée d'une feuille d'aluminium perforée 47 ou d'une feuille ayant les mêmes propriétés techniques. Il est donc possible d'enlever cette feuille formant à l'intérieur de la cuve de cuisson 30 un réceptacle pour les impuretés.

De la description qui vient d'en être donnée on remarquera que l'installation de cuisson de frites selon l'invention, outre ses moyens de commande programmés, exécute deux phases qui sont caractéristiques de l'invention.

Ces phases sont:
a) le dégivrage des frites surgélées lorsqu'elles séjournent dans le silo 2 et, en particulier, dans le premier panier 11. Ce dégivrage est provoqué par un courant d'air froid et sec. La dessication de l'air est provoqué lors de son passage sur l'évaporateur 16. Le dégivrage périodique de celui-ci est prévu et l'évacuation de l'eau de cet évaporateur se fait au niveau du piège à eau 48.
b) Le soufflage d'air à température ambiante sur les frites cuites lorsqu'elle séjournent dans le panier de cuisson 15 exactement avant leur diversement. Cette phase importante permet d'obtenir des frites croquantes, ce qui est un objectif qui n'est pas atteint dans les appareils automatiques connus à ce jour.

## Revendications

1. Installation de cuisson de frites à partir de frites précuites surgelées, comprénant un silo (2) à partir duquel les frites peuvent être délivrées à un premier panier (11) faisant partie d'une balance (8) de laquelle les frites sont delivreés à la cuisson, le silo (2) et la balance (8) étant disposés dans une enceinte (1) où règne une température de surgélation, caractérisée en ce que un courant d'air froid est maintenu dans ladite enceinte et amené à circuler sur un évaporateur (16) d'un dispositif refrigérateur disposé dans cette enceinte pour provoquer la dessication de l'air et donc le dégivrage des frites (7).

2. Installation selon la revendication 1. caractérisée en ce qu'une bande convoyeuse souple (3) munie de doigts souples (4) délivre les frites (7), extraites par gravité dudit silo (2) pour les faire tomber dans le premier panier précité (11).

3. Installation selon l'une quelconque des revendications 1-2 caractérisée en ce que le premier panier précité (11) est obturé à sa base par une gouttière pivotante (12).

4. Installation selon l'une quelconque des revendications 1-3 caractérisée en ce que le premier panier précité (11) a la forme d'un entonnoir.

5. Installation selon l'une quelconque des revendications précédentes caractérisée en ce que l'enceinte précitée (1) est disposée au dessus d'une enceinte de base (29) séparée de la première par une cloison (18) et une trappe (20) isothermiques, l'ouverture de ladite trappe (20) étant synchronisée avec la gouttière pivotante précitée (12).

6. Installation selon la revendication 5 caractérisée en ce que l'ouverture de la trappe précitée (20) est commandée à partir d'un moteur éléctrique à commande programmée (28).

7. Installation selon l'une quelconque des revendications 1-6 caractérisée en ce que la balance précitée (8) porte le premier panier précité (11) lequel est monté à l'extrémité d'un levier (9), muni d'un contrepoids de règlage (10), ledit levier (9) étant équipé d'un interrupteur "reed" (14).

8. Installation selon l'une quelconque des revendications 3-7 caractérisée en ce que la gouttière pivotante précitée (12) est articulée sur le premier panier précité (11) et constitue le fond de celui-ci.

9. Installation selon l'une quelconque des revendications 3-8 caractérisée en ce que la gouttière pivotante précitée (12) est réunie à la trappe précitée (20) par un moyen de liaison tel qu'un câble (21) pour synchroniser le pivotement de cette gouttière avec l'ouverture de la trappe précitée.

10. Installation selon l'une quelconque des revendications 1-9 caractérisée en ce que la trappe précitée (20) est maintenue ouverte sous un angle qui permet de diriger les frites tombant, par gravité, vers un panier de cuisson (15).

11. Installation selon l'un quelconque des revendications 5-10 caractérisée en ce que le panier de cuisson précité (15) est monté à basculement par rapport à l'enceinte de base précitée (29) et en ce que son basculement est provoqué par un jeu de leviers (35,36) à partir d'un moteur électrique (42) à commande programmée.

12. Installation selon la revendication 11 caractérisée en ce que le jeu de leviers précité (35,36) comporte un premier levier (35) actionné directement par le moteur éléctrique précité (42), ledit levier (35) étant articulé sur un second levier (36) monté à pivotement par rapport à l'enceinte de base précitée (29), toutes choses étant telles que l'actionnement du premier levier (35) agit sur le basculement du panier de cuisson (15) et sur ledit second levier (36) qui, lorsque le panier de cuisson est en position basculée, appuie sur un moyen d'ouverture d'une porte frontale (38) faisant partie de l'enceinte de base précitée (29).

13. Installation selon la revendication 12 caractérisée en ce que le panier de cuisson (15) est munie, du coté dirigé vers la porte frontale précitée (38) d'une gouttière de déversement (40).

14. Installation selon l'une quelconque des revendications 1-13 caractérisée en ce qu'elle comporte une cuve (30) destinée à recevoir l'huile de cuisson, dans laquelle s'adapte une feuille d'aluminium (47) ou d'une matière techniquement similaire, perforée qui peut être enlevée régulièrement et remplacée par une nouvelle.

15. Installation selon la revendication 14 caractérisée en ce que dans la cuve de cuisson précitée (30) est monté un détecteur de niveau d'huile (46), pour interrompre le fonctionnement de l'installation lorsque le niveau de huile à baissé, indiquant par là la nécessité du remplacement de l'huile.

16. Installation selon l'une quelconque des revendications 5-14, caractérisée en ce qu'un ventilateur (13) est prévu pour provoquer un courant d'air dans l'enceinte de base précitée (29) lorsque la porte frontale précitée (38) est ouverte, ledit courant d'air étant dirigé sur les frites dans le panier de cuisson (15) au cours d'un arrêt du panier de cuisson lors de la phase de basculement de celui-ci (15).

## Claims

1. Installation for cooking French fries starting from deep-frozen precooked French fries, comprising a silo (2) from which the French fries may be delivered to a first basket (11) forming part of a beam balance (8) from which the French fries are delivered to be cooked, the silo (2) and the beam balance (8) being placed in a chamber (1) where a deep-freeze temperature prevails, characterized in that a stream of cold air is maintained in the said chamber and made to flow over an evaporator (16) of a refrigerating device placed in this chamber in order to dry the air and therefore to defrost the French fries (7).

2. Installation according to Claim 1, characterized in that a flexible conveyor belt (3) provided with flexible fingers (4) delivers the French fries (7), extracted from the said silo (2) under gravity, so that they fall into the first aforementioned basket (11).

3. Installation according to either of Claims 1-2, characterized in that the first aforementioned basket (11) is closed off at its base by a pivoting trough (12).

4. Installation according to any one of Claims 1-3, characterized in that the first aforementioned basket (11) has the shape of a funnel.

5. Installation according to any one of the preceding claims, characterized in that the aforementioned chamber (1) is placed above a base chamber (29) separated from the first chamber by an isothermal partition (18) and an isothermal trapdoor (20), the opening of the said trapdoor (20) being synchronized with the aforementioned pivoting trough (12).

6. Installation according to Claim 5, characterized in that the opening of the aforementioned trapdoor (20) is controlled by a programmed-control electric motor (28).

7. Installation according to any one of Claims 1-6, characterized in that the aforementioned beam balance (8) carries the aforementioned first basket (11), this basket being mounted on the end of a lever (9) provided with an adjustment counterweight (10), the said lever (9) being equipped with a reed switch (14).

8. Installation according to any one of Claims 3-7, characterized in that the aforementioned pivoting trough (12) is articulated to the first aforementioned basket (11) and constitutes the bottom thereof.

9. Installation according to any one of Claims 3-8, characterized in that the aforementioned pivoting trough (12) is joined to the aforementioned trapdoor (20) by a linkage means such as a cable (21) in order to synchronize the pivoting of this trough with the opening of the aforementioned trapdoor.

10. Installation according to any one of Claims 1-9, characterized in that the aforementioned trapdoor (20) is kept open at an angle which enables the French fries falling under gravity to be directed towards a cooking basket (15).

11. Installation according to any one of Claims 5-10, characterized in that the aforementioned cooking basket (15) is mounted so as to tip with respect to the aforementioned base chamber (29) and in that it is tipped by means of a set of levers (35, 36) using a programmed-control electric motor (42).

12. Installation according to Claim 11, characterized in that the aforementioned set of levers (35, 36) includes a first lever (35) actuated directly by the aforementioned electric motor (42), the said lever (35) being articulated to a second lever (36) mounted so as to pivot with respect to the aforementioned base chamber (29), everything being such that activation of the first lever (35) acts on the tipping of the cooking basket (15) and on the said second lever (36) which, when the cooking basket is in the tipped position, bears on a means for opening a front door (38) forming part of the aforementioned base chamber (29).

13. Installation according to Claim 12, characterized in that the cooking basket (15) is provided, on the side directed towards the aforementioned front door (38), with a discharging trough (40).

14. Installation according to any one of Claims 1-13, characterized in that it includes a vessel (30) intended to receive the cooking oil, in which is fitted a perforated sheet of aluminium (47), or one made of a technically similar material, which may be regularly removed and replaced by a new one.

15. Installation according to Claim 14, characterized in that mounted in the aforementioned cooking vessel (30) is an oil-level detector (46) in order to interrupt the operation of the installation when the oil level has fallen, thereby indicating the need to replace the oil.

16. Installation according to any one of Claims 5-14, characterized in that a fan (13) is provided in order to produce a stream of air in the aforementioned base chamber (29) when the aforementioned front door (38) is opened, the said stream of air being directed onto the French fries in the cooking basket (15) when the cooking basket has stopped during the tipping phase of the latter (15).

## Patentansprüche

1. Vorrichtung zum Garen von Pommes Frittes aus vorgekochten, tiefgekühlten Pommes Frittes, umfassend ein Silo (2), aus dem die Pommes Frittes in einen ersten Korb (11) gelangen können, welcher ein Teil einer Waage (8) ist, aus welcher die Pommes Frittes zum Garen geliefert werden, wobei das Silo (2) und die Waage (8) in einer Umhüllung (1) angeordnet sind, in der eine Tiefkühltemperatur herrscht,
**dadurch gekennzeichnet,**
daß in der Umhüllung ein kalter Luftstrom gehalten und über einen Verdampfer (16) einer Kühlvorrichtung umgewälzt wird, welche sich in der Umhüllung befindet, um ein Trocknen der Luft und mithin ein Enteisen der Pommes Frittes (7) zu bewirken.

2. Vorrichtung nach Anspruch 1,
**dadurch gekennzeichnet,**
daß ein elastisches Förderband (3) mit elastischen Fingern (4) die durch Schwerkraft aus dem Silo (2) entnommenen Pommes Frittes (7) befördert, um sie in den genannten ersten Korb (11) fallen zu lassen.

3. Vorrichtung nach Anspruch 1 oder 2,
**dadurch gekennzeichnet,**
daß der erste genannte Korb (11) an seiner Unterseite durch eine Schwenkrinne (12) verschlossen ist.

4. Vorrichtung nach einem der Ansprüche 1 bis 3,
**dadurch gekennzeichnet,**
daß der genannte erste Korb (11) die Form eines Trichters aufweist.

5. Vorrichtung nach einem der vorhergehenden Ansprüche,
**dadurch gekennzeichnet,**
daß die genannte Umhüllung (1) oberhalb eines Basisgehäuses (29) angeordnet ist, welches von der Umhüllung durch eine Trennwand (18) und eine isotherme Klappe (20) getrennt ist, wobei das Öffnen der Klappe (20) mit der Schwenkrinne (12) synchronisiert ist.

6. Vorrichtung nach Anspruch 5,
**dadurch gekennzeichnet,**
daß das Öffnen der Klappe (20) von einem programmgesteuerten Elektromotor (28) gesteuert wird.

7. Vorrichtung nach einem der Ansprüche 1 bis 6,
**dadurch gekennzeichnet,**
daß die Waage (8) den ersten Korb (11) trägt, der an einem Hebelarm (9) angebracht ist, welcher ein Regel-Gegengewicht (10) aufweist, wobei der Hebel (9) mit einem Reed-Schalter (14) ausgestattet ist.

8. Vorrichtung nach einem der Ansprüche 3 bis 7,
**dadurch gekennzeichnet,**
daß die Schwenkrinne (12) an dem ersten Korb (11) angelenkt ist und dessen Boden bildet.

9. Vorrichtung nach einem der Ansprüche 3 bis 8,
**dadurch gekennzeichnet,**
daß die Schwenkrinne (12) mit der Klappe (20) über ein Verbindungsmittel wie z.B. ein Seil (21) verbunden ist, um die Schwenkbewegung der Rinne mit dem Öffnen der Klappe zu synchronisieren.

10. Vorrichtung nach einem der Ansprüche 1 bis 9,
**dadurch gekennzeichnet,**
daß die Klappe (20) unter einem Winkel offengehalten wird, der es ermöglicht, die durch Schwerkraft niederfallenden Pommes Frittes in einen Garkorb (15) zu lenken.

11. Vorrichtung nach einem der Ansprüche 5 bis 10,
**dadurch gekennzeichnet,**
daß der Garkorb (15) kippbar bezüglich des Basisgehäuses (29) gelagert ist, und daß sein Kippen bewirkt wird durch ein Gestänge (35, 38) mit Hilfe eines programmgesteuerten Elektromotors (42).

12. Vorrichtung nach Anspruch 11,
**dadurch gekennzeichnet,**
daß das Gestänge (35, 36) einen ersten Hebel (35), der direkt von dem Elektromotor (42) betätigt wird, aufweist, wobei der Hebel (35) an einen zweiten Hebel (36) angelenkt ist, der schwenkbar bezüglich des Basisgehäuses (29) gelagert ist, wobei diese Teile derart ausgebildet und angeordnet sind, daß eine Betätigung des ersten Hebels (35) auf das Kippen des Garkorbs (15) und auf den zweiten Hebel (36) einwirkt, wobei der zweite Hebel dann, wenn sich der Garkorb in gekippter Stellung befindet, auf eine Öffnungseinrichtung einer Vordertür (38) einwirkt, die Teil des Basisgehäuses (29) ist.

13. Vorrichtung nach Anspruch 12,
**dadurch gekennzeichnet,**
daß der Garkorb (15) auf der der Vordertür (38) zugewandten Seite mit einer Schüttrinne (40) ausgestattet ist.

14. Vorrichtung nach einem der Ansprüche 1 bis 13,
**dadurch gekennzeichnet,**
daß sie ein Garbecken (30) besitzt, welches für die Aufnahme von Frittieröl vorgesehen ist, und in das eine Aluminiumfolie (47) oder eine Folie aus technisch ähnlichem Werkstoff eingelegt ist, wobei die Folie perforiert ist und regelmäßig herausgenommen und durch eine neue Folie ersetzt werden kann.

15. Vorrichtung nach Anspruch 14,
**dadurch gekennzeichnet,**
daß in dem Garbecken (30) ein Ölstandsfühler (46) angebracht ist, um den Betrieb der Vorrichtung dann zu unterbrechen, wenn der Füllstand des Öls absinkt, was anzeigt, daß das Öl nachgefüllt werden muß.

16. Vorrichtung nach einem der Ansprüche 5 bis 14,
**dadurch gekennzeichnet,**
daß ein Ventilator (13) vorgesehen ist, um einen Luftstrom in dem Basisgehäuse (19) zu erzeugen, wenn die Vordertür (38) geöffnet wird, wobei dieser Luftstrom auf die in dem Garkorb (15) befindlichen Pommes Frittes gelenkt wird, wenn der Garkorb in der Kipp-Phase des Korbs (15) angehalten wird.
